# EUROPÄISCHE PATENTSCHRIFT

(11) **EP 0 730 743 B1**
(45) Veröffentlichungstag und Bekanntmachung des Hinweises auf die Patenterteilung: **28.07.1999**
(21) Anmeldenummer: 95932778.4
(22) Anmeldetag: 20.09.1995
(51) Int. Cl.: G01S 15/93, G01S 7/527

(54) **VERFAHREN ZUR ULTRASCHALL-HINDERNISERKENNUNG**
ULTRASOUND OBSTACLE-DETECTING PROCESS
PROCEDE DE DETECTION D'OBSTACLES PAR ULTRASONS

(30) Priorität: 23.09.1994 DE 4433957
(43) Veröffentlichungstag der Anmeldung: 11.09.1996
(73) Patentinhaber: Mayser GmbH & Co., D-89073 Ulm (DE)
(72) Erfinder: KREMSER, Johann, A-8600 Bruck a.d. Mur (AT)
(74) Vertreter: Weller, Erich W.
(86) Internationale Anmeldenummer: EP9503705
(87) Internationale Veröffentlichungsnummer: WO9609559

(56) Entgegenhaltungen:
- EP-A- 0 326 623
- WO-A-81/00456
- WO-A-93/06503
- GB-A- 2 059 590
- US-A- 4 845 682
- PROCEEDINGS OF THE INTERNATIONAL CONFERENCE ON ROBOTICS AND AUTOMAT, NICE, MAY 12 - 14, 1992, Bd. VOL. 2, Nr. CONF. 8, 12.Mai 1992 INSTITUTE OF ELECTRICAL AND ELECTRONICS ENGINEERS, Seiten 1482-1487, XP 000299924 SKEWIS T ET AL 'EXPERIMENTS WITH A MOBILE ROBOT OPERATING IN A CLUTTERED UNKNOWN ENVIRONMENT'

## Beschreibung

Die Erfindung bezieht sich auf ein Verfahren zur Ultraschall-Hinderniserkennung nach dem Oberbegriff des Anspruchs 1. Derartige Verfahren werden beispielsweise für fahrerlose Fahrzeuge verwendet, die sich in Gassen eines automatisierten Lagerhaltungssystems bewegen. Mit dem Verfahren sollen die Fahrzeuge Hindernisse in den Gassen, z.B. dort befindliche Personen, erkennen und rechtzeitig anhalten können, wobei sich das Problem der Unterscheidung hindernisbedingter Ultraschallechos von ultraschallfrequenten Störsignalen stellt.

Ein Verfahren dieser Art ist in der Offenlegungsschrift EP 0 326 623 A1 beschrieben. Das dortige Verfahren beinhaltet die gleichzeitige periodische Aussendung von Ultraschallimpulsen aus zwei nebeneinander liegenden Sendern, das Erfassen eines gegebenenfalls vorhandenen, reflektierten Ultraschallechos durch am Ort der Sender angeordnete Empfänger sowie eine Analyse der empfangenen Echos dahingegend, daß aus deren Laufzeiten die Koordinaten eines Hindernisses sowohl in Abstrahlrichtung als auch quer dazu ermittelt werden. Dabei können mehr als zwei Ultraschallsender vorgesehen sein, die dann jeweils paarweise sequentiell zur Impulserzeugung angesteuert werden. Jeder Sendeimpuls kann einen oder mehrere verschachtelte Frequenzen enthalten, und die Sendefrequenzen können zudem von einer Abtastung zur nächsten über Softwarealgorithmen variiert werden, um zu vermeiden, daß ein Hindernis, das Ultraschallwellen einer bestimmten Frequenz mit einem Phasensprung in der Nähe von π reflektiert, nicht erkannt wird.

Ein weiteres Verfahren dieser Art ist in der Offenlegungsschrift WO 93/06503 offenbart. Beim dortigen Verfahren werden zunächst durch die Methode der Dual-Matched-Filterung sogenannte A-Scan Echogramme gewonnen, in denen die Echoamplituden über die Laufzeit aufgetragen sind. Dazu wird das empfangene Ultraschallsignal verstärkt und einer Bandpaßfilterung sowie optional einer anschließenden Mittelwertbildung unterzogen, um zufällige Rauschanteile zu dämpfen und die stabilen Echosignale zu verstärken. In einem "digital-matched" Filter wird das gemessene Echosignal mit einem Referenzsignal verglichen, welches Multiplikationsfaktoren für die einzelnen Echofenster beinhaltet, die in einem vorangegangenen Off-Line-Betrieb unter senkrechter Inzidenz von der idealen Echoumgebung aufgenommen wurden. Das Ergebnis wird als neue Referenz für einen wiederholten Vergleich benutzt. Durch Verschwenken von Sender und Empfänger können anschließend zweidimensionale, sogenannte B-Scan Echogramme aufgenommen werden. Zur Auswertung kann ein Fenster über das B-Scan Echogramm hinweggeführt und in Zellen unterteilt werden, in denen jeweils die Signalintensität gemessen und daraus der Mittelwert innerhalb des Fensters gebildet wird, der wiederum mit einem vorgegebenen Schwellenwert verglichen wird. Ist der Mittelwert höher als der Schwellenwert, wird die Amplitude der fenstermittigen Zelle erhöht, andernfalls verkleinert. In einem alternativen Verfahren werden die Zellen innerhalb eines Fensters nach aufsteigender Größe sortiert und diejenige Zelle, die reihenmittig liegt, herausgenommen und als neue fenstermittige Zelle eingesetzt. Diese Methode wird auch als Medianwertbildung oder Rank-Order-Filterung bezeichnet.

Der Erfindung liegt als technisches Problem die Bereitstellung eines Verfahrens zur Ultraschall-Hinderniserkennung der eingangs genannten Art zugrunde, mit dem sich Hindernisse sehr zuverlässig auch bei Vorliegen von ultraschallfrequenten Störssignalen erkennen lassen.

Dieses Problem wird durch ein Verfahren mit den Merkmalen des Anspruchs 1 gelöst. Die hohe Zuverlässigkeit der Hinderniserkennung wird insbesondere dadurch erzielt, daß das nach jeder Ultraschallimpulsaussendung jeweils sensierte Echogramm einer Hüllkurvenbewertung unterzogen wird, bei der vorherige Meßzyklen berücksichtigt werden, indem Amplituden, die sich an zeitgleicher Stelle auch in vorangegangenen Echogrammen finden, tendenziell verstärkt werden, während Amplituden, die nur sporadisch in aufeinanderfolgenden Echogrammen auftreten, tendenziell erniedrigt werden. Dies macht vorteilhaften Gebrauch von der Tatsache, daß Störechos, z.B. von reflektierenden Flächen in einem nicht interessierenden Seitenbereich der eigentlichen Ultraschallpegel oder von Industrielärmquellen, im Gegensatz zu eigentlichen Hindernisechos über eine gewisse Meßdauer hinweg nicht kohärent zu den ausgesandten Ultraschallimpulsen bleiben. Durch die erfindungsgemäße Bewertung werden solche unkorrelierten Störechos unterdrückt, während die kohärenten Hindernisechos verstärkt werden. Dies verbessert die Unterscheidbarkeit von Störechos und Hindernisechos beträchtlich, so daß aus den solchermaßen gewonnenen Auswerteechogrammen ein Hindernis mit hoher Sicherheit erkannt und seine Lage relativ zum Ort der Ultraschallsender und -empfänger mit hoher Genauigkeit bestimmt werden kann. Versuche haben insbesondere gezeigt, daß auch Personen, die aufgrund der vergleichsweise schwachen Ultraschallrefle-xionseigenschaften von Kleidungsstoffen nur verhältnismäßig schwierig mittels Ultraschall zu detektieren sind, durch diese Methode sehr zuverlässig als Hindernisse erkannt werden.

Eine Ausgestaltung des Verfahrens nach Anspruchs 2 realisiert eine vorteilhafte, konkrete Bewertungsmethode, indem neu erkannte Echohüllkurvenamplituden erst bei Überschreiten eines vorgegebenen Amplitudenschwellenwertes Berücksichtigung finden und die Amplituden des bisherigen Auswerteechogramms um einen vorgegebenen Faktor vermindert werden, wenn die zugehörige zeitgleiche Amplitude eines nachfolgend gemessenen Echogramms den vorgegebenen Schwellenwert nicht mehr erreicht. Damit werden innerhalb relativ weniger Meßzyklen die kohärenten Hindernisechos beträchtlich gegenüber den nichtkohärenten Störechos verstärkt, selbst wenn letztere bei einer Einzelmessung höhere Amplituden als die Hindernisechos aufweisen.

Eine vorteilhafte Möglichkeit, aus den gewonnenen Auswerteechogrammen das Vorliegen eines tatsächlichen Hindernisses abzuleiten, bietet eine Weiterbildung der Erfindung nach Anspruch 3. Bei dieser Vorgehensweise werden die Flächeninhalte der durch die Bewertung generierten Echokurven, die in den nach einer bestimmten Anzahl von Meßzyklen erhaltenen Auswerteechogrammen vorliegen, bestimmt und mit den zwei vorgegebenen Schwellenwerten verglichen. Liegt der Flächeninhalt eines Echos über dem oberen Schwellenwert, so wird dies als vorliegendes Hindernis interpretiert. Liegt der Flächeninhalt eines Echos zwischen dem unteren und dem oberen Schwellenwert, so wird nur dann auf das Vorliegen eines Hindernisses geschlossen, wenn der Flächeninhalt eines zugehörigen Echos von einer benachbarten Sender- und Empfängereinheit ebenfalls größer als der untere Schwellenwert ist.

Eine Ausgestaltung der Erfindung nach Anspruch 4 kann für bestimmte Anwendungsfälle zusätzliche Erkennungssicherheit bieten, indem im laufenden Betrieb erhaltene Echogramme, bei denen es sich je nach Bedarf um gemessene Echogramme oder um die daraus abgeleiteten Auswerteechogramme handeln kann, mit entsprechenden Echogrammen verglichen werden, die vorab durch rechnergestützte Simulationen oder empirische Versuchsreihen gewonnen und abgespeichert wurden. Diese Vorgehensweise nutzt die Erkenntnis, daß die Hüllkurvenform der Echos bei gegebenem Ultraschallsendeimpuls meist in charakteristischer Weise von dem diese Echos durch Reflexion erzeugenden Gegenstand abhängig sind. Durch den Echohüllkurvenvergleich kann folglich mit größerer Sicherheit auf die Art des Gegenstandes geschlossen werden. Eine weitere Anwendungsmöglichkeit dieser Methode besteht in der Lenkung fahrerloser Fahrzeuge, die stets eine gewisse Route befahren, z.B. Transportfahrzeuge in Gassen eines automatisierten Lagerhaltungssystems. Anhand einer Rechnersimulation der Lagerhallengeometrie oder noch besser anhand von Lernfahrten lassen sich Echogramme über den gesamten Fahrweg aufnehmen und abspeichern. Sobald dann im anschließenden, normalen Betrieb signifikante Abweichungen auftreten, kann daraus bereits im Vorfeld eine Aussage über das Vorhandensein eines Hindernisses gemacht werden, oder die so erhaltene Information wird mit der Hindernisinformation aus den Auswerteechogrammen zusammengefaßt bewertet.

Eine Ausgestaltung der Erfindung nach Anspruch 5 beugt möglichen Fehlinterpretationen in Fällen vor, bei denen sich die Ultraschallsender und -empfänger mit merklicher Geschwinigkeit relativ zu einem Hindernis bewegen und sich daher die Hindernisentfernung rasch ändert. Die vorhandene Relativgeschwindigkeit hat zur Folge, daß der Zeitabstand zwischen Impulssendezeitpunkt und Hindernisechoempfangszeitpunkt stetig größer oder kleiner wird. Dem wird durch die passende Nachführung der Echogramme Rechnung getragen, so daß die Korrelation zwischen Sendeimpuls und Hindernisechos korrekt aufrechterhalten bleibt und die Hindernisechos nicht etwa durch das Bewertungsverfahren fälschlicherweise unterdrückt werden.

Eine Weiterbildung der Erfindung nach Anspruch 6 verhindert Fehlinterpretationen aufgrund von Überreichweiten. Beispielsweise kann ein weiter entferntes Hindernis mit höherer Ultraschallreflektion eine etwa gleich große Echoamplitude liefern wie ein näherliegendes Hindernis mit geringerer Ultraschallreflektion. Wird das Echo des weiter entfernten Hindernisses von einem früheren Meßzyklus zufällig gleichzeitig mit dem Echo des näherliegenden Hindernisses aus einem späteren Meßzyklus empfangen, so könnte das System fälschlicherweise auch dann noch auf das Vorhandensein des nahe gelegenen Hindernisses schließen, wenn sich dieses aus dem Erfassungsbereich entfernt hat. Dieser Fehler wird durch die ereignisabhängige Beschränkung des Abstrahlpegels jeweils auf Entfernungen von nur wenig größer als derjenigen eines erkannten Hindernisses verhindert.

Eine Weiterbildung der Erfindung nach Anspruch 7 unterdrückt zuverlässig Störechos, die in festen periodischen Zeitabständen auftreten und bei zufälliger Koinzidenz mit einer festen Meßzyklusfrequenz ein falsches Hindernisecho vortäuschen könnten. Solche Störechos können z.B. von ultraschallfrequentem Industrielärm oder von benachbarten Ultraschall-Hinderniserkennungssystemen herrühren. Durch die bevorzugt zufallsverteilte Meßzyklenfrequenzvariation werden solche störenden, zufälligen Störechokoinzidenzen beseitigt, so daß die Störechos durch das Bewertungsverfahren nicht zu unzutreffenden Hindernisechos verstärkt werden.

Eine Weiterbildung der Erfindung nach Anspruch 8 leistet eine Vorfilterung der gemessenen Echogramme an den den Ultraschallwellenempfängern nachgeschalteten Empfangsverstärkern in einer Art und Weise, welche die Unterscheidbarkeit von Stör- und Hindernisechos erhöht und eine verfeinerte Ortsbestimmung der Hindernisse erlaubt. Dabei wird die Empfangsverstärkung nicht nur in ihrem zeitlichen Verlauf während der Aufnahme eines Echogramms als zum Beispiel monoton ansteigende Funktion der Zeit nach Senden eines Ultraschallimpulses, sondern zusätzlich ereignisabhängig variabel vorgegeben. Die Verstärkung kann daher in den Zeitbereichen, in denen Hindernisechos auftreten, höher und in den übrigen Zeitbereichen niedriger als im normalen, hindernisfreien Zeitverlauf eingestellt werden. In günstigen Fällen kann bereits durch diese Maßnahme in einem einzigen Verfahrensschritt eine weitestgehende Störechoausblendung erzielt werden. Durch die vorzugsweise softwaregesteuerte Verstärkungseinstellung kann der Verstärkungskurvenverlauf zudem exakt den jeweiligen physikalischen Gegebenheiten für die Schallausbreitung im Raum in seiner Grundfunktion angepaßt werden, wodurch die Strahlungscharakteristika der Ultraschallsensoren den Echoereignissen entsprechend modifiziert werden können.

Eine bevorzugte Ausführungsform der Erfindung ist in den Zeichnungen dargestellt und wird nachfolgend beschrieben. Hierbei zeigen:
- Fig. 1: eine Draufsicht auf den Umgebungsbereich eines mit einer Ultraschall-Hinderniserkennungseinrichtung ausgerüsteten, fahrerlosen Fahrzeuges in einem automatisierten Lagerhaltungssystem,
- Fig. 2: einen Programmablaufplan des von dem Ultraschall-Hinderniserkennungssystem des Fahrzeugs von Fig. 1 durchgeführten Erkennungsverfahrens,
- Fig. 3A und 3B: eine zeitliche Abfolge von sechs gemessenen Echogrammen (linke Hälfte) zweier Ultraschallsensoren des Fahrzeugs von Fig. 1 sowie die daraus verfahrensgemäß abgeleiteten Auswerteechogramme (rechte Hälfte) und
- Fig. 4: ein Echogramm, das eine verfahrensgemäße Hindernisbestimmungsanalyse für das zeitlich letzte Auswerteechogramm von Fig. 3B illustriert.

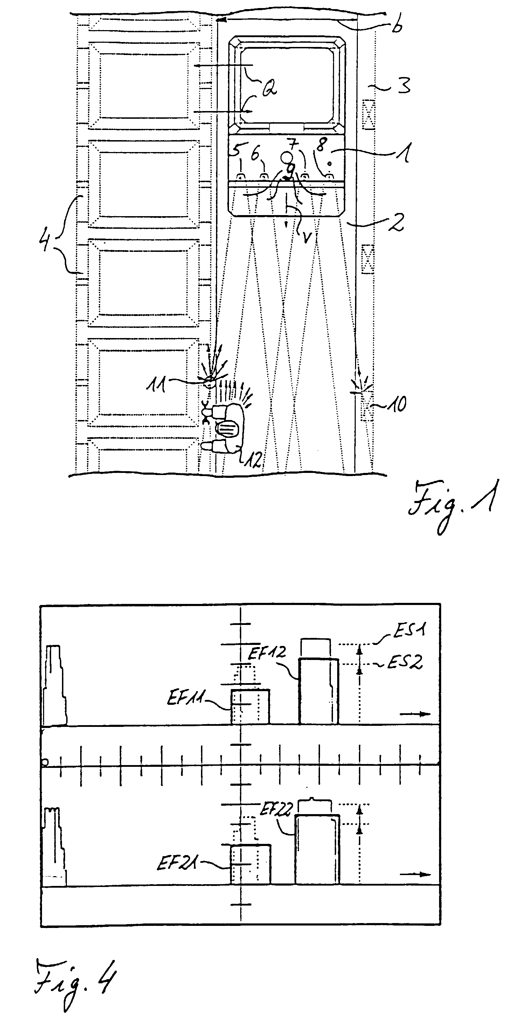

In dem Ausschnitt aus einem automatisierten Lagerhaltungssystem von Fig. 1 ist ein fahrerloses Fahrzeug (1) zu erkennen, das Teil eines mehrere derartige Fahrzeuge umfassenden fahrerlosen Transportsystem (FTS) für das Lager ist. Das Fahrzeug (1) fährt entlang einer engen Lagergasse (2), deren Breite (b) nur wenig größer als die Fahrzeugbreite ist. Die gezeigte Gasse (2) ist auf der einen Seite von einer Mauer (3) begrenzt, während sich auf der anderen Seite Verladerampen (4) befinden, auf denen mittels Querförderer Transportgut auf Paletten zu- und entladen wird, wie mit den Pfeilen (Q) angedeutet ist. Um ein rechtzeitiges Anhalten des Fahrzeugs (1) vor in der Gasse (2) befindlichen Hindernissen zu gewährleisten, ist es mit einem Ultraschall-Hinderniserkennungssystem ausgerüstet. Das Hinderniserkennungssystem enthält vier entlang der Fahrzeugquerrichtung beabstandet angeordnete Ultraschallwandler als Ultraschallsender- und -empfängereinheiten (5, 6, 7, 8) in Form jeweils eines elektrostatischen Wandlers, der gegenüber einem ebenfalls verwendbaren Piezowandler eine bessere Breitbandigkeit besitzt und damit besonders gut für einen Mehrfrequenzbetrieb geeignet ist. Es versteht sich, daß je nach Anwendungsfall auch mehr oder weniger als vier Ultraschallwandler verwendet werden können. Über die Wandler (5bis 8) werden in periodischer Abfolge Ultraschallimpulse vom Fahrzeug (1) nach vorn abgestrahlt. Durch den Empfang von zugehörigen Ultraschallechos, die von Gegenständen reflektiert werden, welche sich im Bereich der abgestrahlten Ultraschallimpulskegel (9) befinden, vermag das Fahrzeug (1), das sich mit einer Geschwindigkeit (v) von typischerweise z.B. 1m/s vorwärts bewegt, selbige Gegenstände zu erkennen. Befinden sich die Gegenstände in der zu befahrenden Gasse (2), so stellen sie Hindernisse dar, die das Fahrzeug (1) zum Halten veranlassen.

Beispielhaft sind in Fig. 1 Ultraschallwellenreflexionen von einem die Sichtbetonmauer (3) unterbrechenden, vertikalen Stützpfeiler (10), von einem Konstruktionselement (11) der Verladerampen (4) sowie von einer Person (12), z.B. einem Lagerarbeiter, eingezeichnet. Von diese drei wie gezeigt reflektierenden Objekten (10, 11, 12) stellt lediglich die Person (12) ein echtes Hindernis für das Fahrzeug (1) dar. Gerade die Erkennung von Personen mittels Ultraschallechos ist nicht einfach, da Kleidungsmaterialien im Vergleich z.B. zu metallischen Gegenständen oder Betonmauerwerk relativ schlechte Ultraschallreflexionseigenschaften besitzen. Eine weitere Schwierigkeit für eine zuverlässige Ultraschall-Hinderniserkennung besteht darin, daß zum Empfangen der eigentlich interessierenden, von tatsächlichen Hindernissen reflektierten Ultraschallwellen, die nachfolgend als Eigenechos bezeichnet werden, unvermeidlicherweise auch andere Ultraschallwellen erfaßt werden, sogenannte Fehlechos (FE), insbesondere Störechos von ultraschallfrequentem Industrielärm und ggf. Fremdechos von anderen Fahrzeugen des Systems.

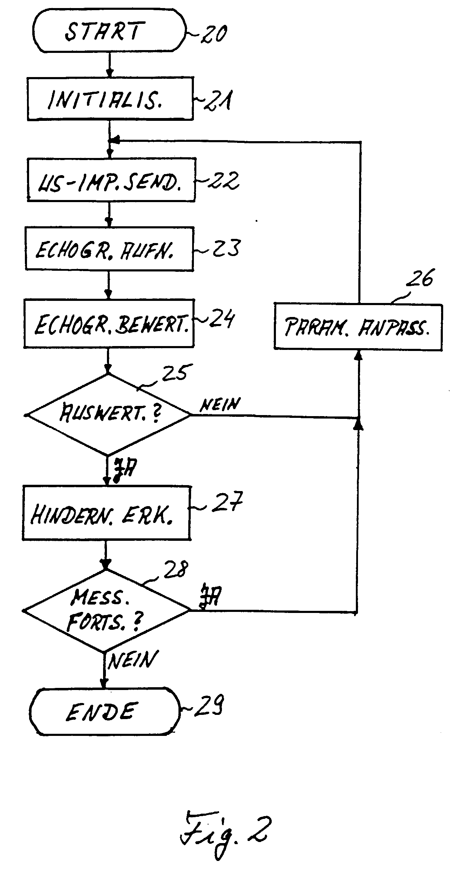

Das Ultraschall-Hinderniserkennungsverfahren, das von dem im Fahrzeug (1) installierten System durchgeführt wird und mit dem vor allem auch Personen sehr zuverlässig als Hindernisse erkannt werden können, ist in seinem Ablauf in Fig. 2 dargestellt. Nach dem Startschritt (20) erfolgen einleitende Schritte, die im Flußdiagramm von Fig. 2 unter dem Initialisierungsschritt (21) zusammengefaßt sind. Diese Initialisierung umfaßt z.B. einen Selbsttest der Hardwarekomponenten, wie z.B. der Ultraschallwandler (5 bis 8) und/oder der diesen nachgeschalteten digitalen und analogen Bausteine. Des weiteren werden in diesem Schritt (21) die diversen anfänglichen Betriebsparameter festgelegt, wie z.B. die eine oder mehreren verwendeten Ultraschallfrequenzen, die Meßzyklendauer, die Verstärkung der Ultraschallempfangsverstärker, die Sendeimpulsabstrahlpegel und die Schwellenwerte für die spätere Echoauswertung.

Als nächster Schritt (22) erfolgt das Senden von Ultraschallimpulsen. Vorliegend werden hierzu alle vier Wandler (5 bis 8) gleichzeitig zur Emission gleichphasiger Ultraschallimpulse angesteuert. Alternativ können die Wandler auch sequentiell paarweise gleichzeitig von einer Fahrzeugseite zur anderen angesteuert werden. Darüber hinaus sind ereignisabhängige Anpassungen möglich, d.h. solche, die bei einem erkannten Hindernis vorgenommen werden. So können die Abstrahlpegel der Sendeimpulse z.B. über einen Softwarealgorithmus an vorgefundene Hindernisse angepaßt werden. Wenn der Abstrahlpegel jeweils so eingestellt wird, daß die Ultraschallwellenreichweite nicht viel größer als der Abstand zu einem nächstgelegenen Hindernis ist, lassen sich Fehler, die auf Überreichweiten beruhen, z.B. kann eine weiter entfernte Wand die gleiche Echoamplitude liefern wie eine näher positionierte Person, verhindern. Wenn daher zufällig eine weiter entfernte Wand ein jeweils zeitgleiches Echo eines früheren Sendeimpulses mit einem Echo eines späteren Sendeimpulses von einer näher gelegenen Person liefert, verhindert diese Abstrahlpegelbegrenzung, daß das System fälschlicherweise aufgrund der von der Wand rückgestrahlten Echos auch dann noch auf das Vorhandensein der näher gelegenen Person schließen würde, wenn sich diese bereits aus dem Ultraschallerfassungsbereich entfernt hat. Weiter kann bei serieller Ansteuerung der nebeneinanderliegenden Ultraschallwandler (5 bis 8) die Bildfolgefrequenz, d.h. die Zeitdauer für einen vollen Abstastzyklus über die gesamte Wandlerreihe, ereignisabhängig angepaßt werden, indem diese Frequenz z.B. um so kleiner gewählt wird, je großflächiger ein Hindernis erkannt wurde.

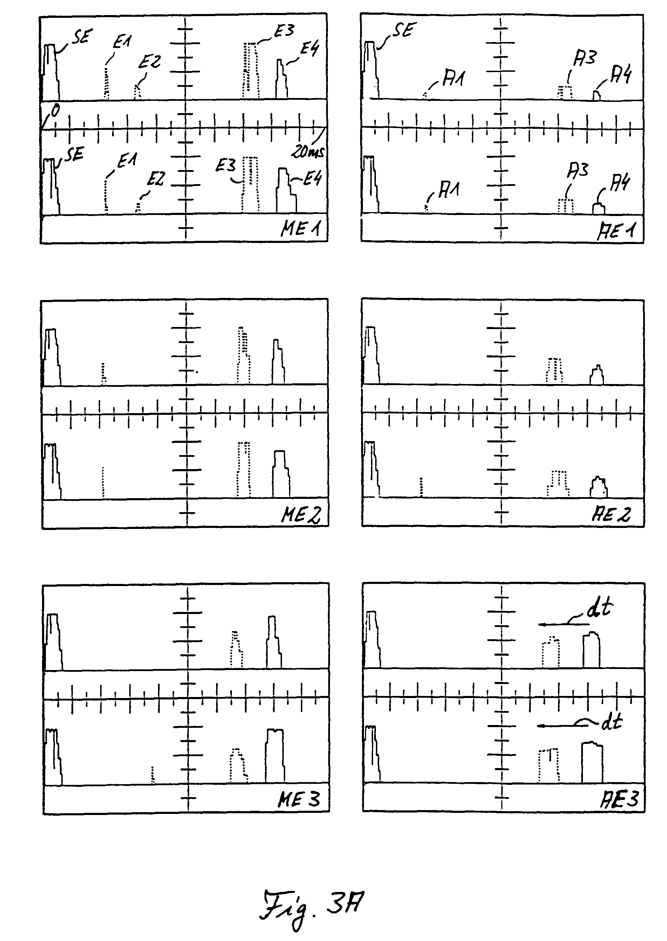

Ein jeder Sendeimpuls besteht aus einer hochfrequenten Pulsfolge, die bevorzugt zwei Pulsgruppen unterschiedlicher Frequenz enthält. Mit diesem Mehrfrequenzbetrieb lassen sich Hindernisse mit größerer Sicherheit erkennen, da manche Materialien bei ganz bestimmten Frequenzen einen sehr geringen Reflexionsgrad gegenüber demjenigen bei anderen Frequenzen aufweisen. So kann beispielsweise ein Frotteestoff Ultraschall bei 51kHz fast vollständig absorbieren, während er die Frequenz von 53kHz ausreichend reflektiert. Des weiteren kann bei mehreren, mit dem Hinderniserkennungssystem ausgerüsteten Fahrzeugen eine fahrzeugindividuelle Frequenzfolge für die Sendeimpulse vorgesehen sein, womit dann Fremdechos von anderen Fahrzeugen sicher erkannt werden. In den nachfolgend näher erläuterten Echogrammen der Fig. 3A und 3B sind jeweils links die Sendeimpuls-Hüllkurven abgebildet.

Nach dem gleichzeitigen Aussenden eines Sendeimpulses an allen vier Wandlern (5 bis 8) bzw. alternativ an wenigstens jeweils zwei Wandlern, wird ein Schritt zur Aufnahme von Echogrammen (23), d.h. der Hüllkurven eintreffender Ultraschallechos, dem ein Echogrammbewertungsschritt (24) folgt, durchgeführt. Die Fig. 3A und 3B zeigen Oszillogrammbilder, in deren unterer Hälfte jeweils Echogramme, die von dem am weitesten rechts am Fahrzeug (1) angeordneten Wandler (5) erhalten wurden, und in deren oberer Hälfte jeweils Echogramme von dem danebenliegenden Wandler (6) gezeigt sind. Dabei stellen die auf der linken Hälfte dargestellten Oszillogrammbilder (MEi; i=1,...,6) die in sechs aufeinanderfolgenden Meßzyklen tatsächlich an den Wandlern (5, 6) gemessenen Echogramme dar, während rechts neben jedem dieser Meßechogramme (ME1 bis ME6) zugehörige Auswerteechogramme (AEi; i=1,...,6) dargestellt sind, die in der nachfolgend beschriebenen Weise zur zuverlässigen Erkennung von Eigenechos auch bei Vorliegen von zusätzlichen Fremdechos gewonnen werden. Zur Orientierung sind die Sendeimpulse (SE) zusätzlich angegeben. Mit den anderen Wandlern (7, 8) wird analog verfahren, ohne daß darauf nachstehend explizit eingegangen zu werden braucht.

Die Meßsequenz beginnt mit der Aufnahme eines ersten Meßechogramms (ME1) nach dem erstmaligen Emittieren eines Ultraschallsendeimpulses (SE) gleichzeitig an beiden Wandlern (5, 6). Die Sendeimpulse (SE) bestehen jeweils aus zwei Pulsgruppen unterschiedlicher Frequenz, die voneinander durch eine Trennpause separiert sind, wobei sich diese Trennpause in den Echogrammen als etwa mittige, vertikale Trennlinie der Einhüllenden zeigt. Innerhalb eines die horizontale Achse der Oszillogrammbilder bildenden Zeitfensters nach Aussenden eines jeweiligen Sendeimpulses (SE), vorliegend während einer Zeitdauer von 20ms, werden die an den Wandlern (5 bis 8) eingehenden Ultraschallwellen aufgenommen. Der Übersichtlichkeit halber sind der jeweilige Sendeimpuls (SE) sowie diejenigen Echos, die sich später als interessierende Eigenechos, d.h. als auf Hindernisse zurückgehende Echos, herausstellen, mit durchgezogener Linie eingezeichnet, von denen die übrigen Echos strichliert abgehoben sind.

Wie im ersten Meßechogramm (ME1) zu erkennen, werden innerhalb dieses Zeitfensters von beiden Wandlern vier Echos (E1, E2, E3, E4) detektiert, die an den Wandlern (5, 6) jeweils fast gleichzeitig eintreffen und daher zur selben Reflexionsquelle gehören, so daß sie in beiden Wandlerechogrammen trotz im Detail unterschiedlicher Echohüllkurve mit den gleichen Bezugszeichen markiert sind. Das erste Echo (E1) ist relativ schwach, erreicht jedoch mehr als die halbe Maximalamplitude, welche durch die Sendeimpulsamplitude definiert ist. Das zweite Echo (E2) ist ebenfalls schwächer und liegt unter dem halben Amplitudenmaximum. Demgegenüber sind die beiden letzten Echos (E3, E4) starke Echos mit merklicher Breite und Amplitude. Dabei ist das letzte Echo (E4) stark treppenförmig gestuft, was darauf hindeutet, daß nur eine teilweise Reflexion an einem Gegenstand stattgefunden hat, der durch Unebenheiten diffus reflektiert. Die weitere Analyse wird zeigen, daß dieses Echo (E4) dasjenige ist, welches von der Person (12) in Fig. 1 reflektiert wird. Dagegen ist das dritte Echo (E3) von sehr hoher Amplitude und ähnelt stark der Form des Sendeimpulses (SE), so daß dieses mit großer Wahrscheinlichkeit auf die Reflexion an einer glatten, ebenen, stark reflektierenden Fläche zurückgeht. Vorliegend ist dies die Reflexion an dem Konstruktionselement (11) im Verladerampenbereich (4) von Fig. 1.

Das Auftreten der Echos (E1 bis E4) jeweils an beiden Wandlern (5, 6) ist angesichts des meist nicht sehr stark richtungsspezifischen Ultraschall-Reflexionsverhaltens verständlich, wenn berücksichtigt wird, daß z.B. bei einem typischen Wandlerabstand von ca. 30cm eine Entfernung des ultraschallreflektierenden Gegenstands von 2,5m eine Winkeldifferenz zwischen den beiden Wandlern (5, 6) von ca. 6° vorliegt. In herkömmlicher und daher nachfolgend nicht weiter zu beschreibender Weise werden die bestehenden Laufzeitunterschiede der zusammengehörigen Echos an den verschiedenen Wandlern erfaßt und zur Lagebestimmung in Längs- und Querrichtung für die später als Hindernisse erkannten, reflektierenden Gegenstände herangezogen. Typische Laufzeitunterschiede liegen z.B. im Bereich von 100µs.

Um eine schärfere Trennung von Eigenechos gegenüber störenden Fehlechos, d.h. Fremd- oder Störechos, zu erzielen, wird die Tatsache ausgenutzt, daß die Eigenechos stets eine feste zeitliche Korrelation zum ausgesandten Ultraschallimpuls (SE) besitzen, die für Störechos nicht gegeben ist. Zufällige zeitliche Korrelationen von Fremdechos anderer Fahrzeuge werden durch eine zufallsverteilte Variation der Meßzyklendauer herausgefiltert. Dazu wird die Zeit zwischen der Aussendung zweier Ultraschallimpulse (SE) innerhalb eines vorgegebenen Bereichs zufallsverteilt gewählt, wobei die Meßzyklusfrequenz im Mittel z.B. ca. 30Hz beträgt. Damit wird gewährleistet, daß eine eventuell kurzzeitig vorhandene Korrelation eines Fremdechos zum Sendeimpuls (SE) des betrachteten Fahrzeugs bei den nächsten Meßzyklen wieder verlorengeht. Eine Unterscheidung kann auch dadurch ermöglicht werden, daß die Sendeimpulse (SE) der verschiedenen Fahrzeuge mit unterschiedlichen Frequenzen codiert werden, z.B. aus Pulsgruppen mit voneinander verschiedenen Frequenzfolgen aufgebaut werden. Die unter diesen Voraussetzungen charakteristische, bleibende zeitliche Korrelation der Eigenechos läßt sich dann nutzen, um im Verlauf einiger Meßzyklen die Eigenechos aus den insgesamt empfangenen Echos zu ermitteln. Hierzu reicht das erste Meßechogramm (ME1) allein nicht aus; aus letzterem läßt sich aufgrund der durchgängig höheren Amplituden der Echos (E1 bis E4) am rechts gelegenen Wandler (5) gegenüber demjenigen des benachbarten Wandlers (6) lediglich mit ausreichender Sicherheit feststellen, daß sich die echoverursachenden Gegenstände näher am auf der rechten Fahrzeugseite angeordneten Wandler (5) als am benachbarten Wandler (6) befinden, während nicht sicher entscheidbar ist, ob sich diese Gegenstände im Überwachungsgebiet, d.h. in der Lagergasse (2), befinden oder nicht.

Um nun in den folgenden Meßzyklen die Eigenechos zuverlässig von Fehlechos zu trennen, wird nach jedem erfaßten Meßechogramm (MEi;i=1,2,...) ein Auswerteechogramm (AEi;i=1,2,...) wie folgt ermittelt. Zu den Echos der Meßechogramme werden die Echoflächen gebildet, indem die Amplitudenwerte der Einhüllenden der Echos in einer vorgegebenen Anzahl von Zeitintervallen abgetastet werden, z.B. 128 Abtastintervalle zu je 125µs Länge. Zur Bildung des ersten Auswerteechogrammes (AE1) werden diejenigen Abtastwerte aus dem ersten Meßechogramm (ME1), die über einem vorgegebenen Amplitudenschwellenwert liegen, durch eine natürliche Zahl, vorliegend durch 4, dividiert, während die Abtastwerte unterhalb dieses Schwellenwertes unberücksichtigt bleiben. Der Schwellenwert wird hierbei ereignisabhängig, d.h. in Abhängigkeit von den aufgenommenen Echogrammen, eingestellt, z.B. in zehn Stufen veränderlich, so daß er sich der Stärke der jeweils vorliegenden Echos anpaßt. Alternativ kann er auch auf einen festen Wert gesetzt werden, z.B. auf die Hälfte des Amplitudenmaximums, das durch die Sendeimpulsamplitude gegeben ist. Im aktuellen Beispiel befindet sich der Schwellenwert gerade auf dem halben Amplitudenmaximum, wodurch das gezeigte erste Auswerteechogramm (AE1) entsteht, bei dem das zweite Echo (E2) nicht mehr vorhanden ist. In den gezeigten, als Datensätze im System speicherbaren Auswerteechogrammen, die nur zu Illustrationszwecken in derselben Oszillogrammbildform wie die Meßechogramme wiedergegeben sind, ist jeweils ebenfalls der unveränderte Sendeimpuls (SE) zusätzlich gezeigt. Die drei Echogramme (E1, E3, E4) im ersten Meßechogramm (ME1), welche den Schwellenwert übersteigen, bleiben im ersten Auswerteechogramm (AE1) als Auswerteechos (A1, A3, A4) formverändert erhalten.

Nachdem das erste Auswerteechogramm (AE1) erstellt ist, fährt das Verfahren mit einer Abfrage (25) fort, ob eine Auswertung, wie sie weiter unten beschrieben wird, durchzuführen ist. Ist dies nicht der Fall, werden im nächsten Schritt (26) die Parameter zur Durchführung eines neuen Meßzyklus geeignet angepaßt. Diese Anpassung erfolgt insbesondere für die ereignisabhängig variierenden Parameter in Abhängigkeit von den im vorigen Meßzyklus gewonnenen Echos bzw. erkannten Hindernissen. Solche Parameter sind insbesondere die Verstärkung der Empfangsverstärker, die Abstrahlpegel für die Ultraschallsendeimpulse sowie der zur Empfindlichkeitseinstellung für die Amplitudenbewertung variabel anpaßbare Amplitudenschwellenwert. Im Gegensatz zum herkömmlichen Vorgehen, bei dem die Empfangsverstärkung als für jeden Meßzyklus unveränderliche, innerhalb eines Meßzyklus zeitabhängige, insbesondere nach einer Exponentialfunktion monoton und konkav ansteigende Funktion vorgegeben wird, wird hier die Empfangsverstärkung in ihrem Zeitverlauf ereignisabhängig für den jeweils nächsten Meßzyklus festgelegt, so daß z.B. die Verstärkung in Zeitbereichen, in denen in vorangegangenen Meßzyklen Echos auftraten, die auf ein relevantes Hindernis hindeuten, zusätzlich angehoben werden kann. Schon allein diese Maßnahme kann zu einer beträchtlichen Unterdrückung von Störechos im Vergleich zu Eigenechos führen. Mit den angepaßten Parametern wird dann zum Schritt (22) der Aussendung eines neuen Ultraschallimpulses zurückgegangen, um den nächsten Meßzyklus durchzuführen.

Im anschließenden, zweiten Meßzyklus zeigen die nach der Emission der Sendeimpulse (SE) aufgenommenen Echogramme (ME2), daß das zweite Echo (E2) verschwunden ist, während die übrigen Echos (E1, E3, E4) in ähnlicher Weise wie im ersten Meßzyklus erscheinen. Das erste Echo (E1) ist dabei schwächer geworden, während das vierte Echo (E4) stärker zu werden scheint. Das aktuelle, zweite Meßechogramm (ME2) wird nun bewertend dazu verwendet, das als Ausgangspunkt dienende erste Auswerteechogramm (AE1) in ein aktuelles, neues Auswerteechogramm (AE2) zu transformieren. Dazu werden wieder die Echoflächen-Abtastwerte der vorgegebenen Abtastintervalle nunmehr aus dem zweiten Meßechogramm (ME2) bestimmt und mit dem eingestellten Amplitudenschwellenwert verglichen. Für jedes Abtastintervall wird dann der zugehörige Auswerteechogrammwert nach den folgenden drei Bewertungskriterien aktualisiert:
(i) Wenn der Abtastwert aus dem aktuellen Meßechogramm (ME2) kleiner als der Amplitudenschwellenwert und der zugehörige bisherige Auswerteechogrammwert null ist, wird der Wert null für das neue Auswerteechogramm beibehalten. Damit werden Echos unterhalb des gesetzten Schwellenwertes weggefiltert.
(ii) Wenn der Abtastwert aus dem aktuellen Meßechogramm (ME2) kleiner als der Amplitudenschwellenwert, der zugehörige Auswerteechogrammwert jedoch nicht null ist, wird letzterer mit einem Faktor kleiner 1 multipliziert, z.B. mittels Division durch eine natürliche Zahl, im vorliegenden Fall durch 4, und dieser verringerte Wert als neuer Auswerteechogrammwert abgespeichert. Diese Maßnahme nützt die hohe Instabilität von Fehlechos hinsichtlich zeitlicher Korrelation mit den Sendeimpulsen (SE), erklärbar durch einen ständigen Wechsel von Kanten, Flächen, Eckbereichen etc., zu deren Unterdrückung aus. Selbst wenn ein Fehlecho in einem Meßzyklus eine vergleichbar große oder sogar eine größere Amplitude wie die Eigenechos aufweist, wird es durch dieses Bewertungskriterium wegen seiner fehlenden Korrelation mit dem Sende impuls (SE) innerhalb weniger Meßzyklen wieder zum Verschwinden gebracht. Ebenso werden zwar kontinuierlich auftretende, jedoch amplitudenschwächere Fehlechos im Verlauf der Meßzyklen sukzessive eliminiert.
(iii) Wenn der Abtastwert im aktuellen Meßechogramm (ME2) größer als der Amplitudenschwellenwert ist, wird dieser Abtastwert zum bisherigen Auswerteechogrammwert zur Bildung des neuen Auswerteechogrammwertes addiert. Mit dieser Bewertungsmaßnahme werden kontinuierlich auftretende, zeitlich zu den Sendeimpulsen bleibend korrelierte Echos in ihrer Wirkung verstärkt. Diese Eigenschaft haben insbesondere Echos von Gegenständen mit räumlich begrenzter Ausdehnung und weitestgehend homogener Oberflächenstruktur. In dem Beispielfall gilt dies besonders für das von der Person (12) verursachte Echo.

Durch sukzessive Anwendung dieser Kriterien für jedes Abtastzeitintervall entsteht aus dem ersten Auswerteechogramm (AE1) und dem zweiten Meßechogramm (ME2) das zweite Auswerteechogramm (AE2). Dabei verschwindet für den einen Wandler (5) nun auch das erste Auswerteecho (A1). An den beiden letzten Auswerteechos (A3, A4) treten seitliche Einsattelungen auf, die davon herrühren, daß sich das Fahrzeug (1) bewegt und sich daher die Entfernungen zwischen Fahrzeug und den echoverursachenden Gegenständen und damit auch die Echolaufzeit vom ersten zum zweiten Meßzyklus geringfügig verändert hat.

In der zum zweiten Meßzyklus oben geschilderten Weise wird anschließend für die folgenden Meßzyklen vorgegangen. Beim dritten Meßechogramm (ME3) sind die schwachen Störechos fast gänzlich verschwunden. Das dritte Echo (E3) ist amplitudenschwächer geworden, während die Amplitude des vierten Echos (E4) zunimmt. Außerdem wird nun aufgrund der im unteren Echogramm höheren Amplitude deutlich, daß der zum vierten Echo (E4) gehörige Gegenstand näher am ganz rechts liegenden Wandler (5) liegt. Wie oben angedeutet, verändert sich die Echolaufzeit von Meßzyklus zu Meßzyklus für Gegenstände, gegenüber denen sich das Fahrzeug (1) bewegt. Damit dieser Effekt nicht etwa zu einer allmählichen Abschwächung auch von Eigenechos führt, wird die Fahrzeugbewegung für die Auswerteechogramme korrigierend berücksichtigt, was im gezeigten Fall erstmals für das dritte Auswerteechogramm (AE3) erfolgt. Hierzu erhält das System eine Information über die Geschwindigkeit (v) des sich bewegenden Fahrzeugs (1). Eine typische Fahrgeschwindigkeit ist 1m/s. Aufgrund dieser Geschwindigkeitsinformation verschiebt das Auswertungssystem die für das dritte Auswerteechogramm (AE3) erhaltenen Daten um ein passendes Zeitinkrement (dt), d.h. um eine passende Anzahl von Abtastzeitintervallen. Dies hat zur Folge, daß die verstärkende Wirkung des Bewertungsverfahrens für alle stehenden bzw. nur langsam verglichen mit der Fahrzeuggeschwindigkeit (v) bewegten Gegenstände aufrechterhalten bleibt, insbesondere also für stehende Hindernisse.

Im vierten Meßzyklus tritt eine neue Echogruppe (E5) auf, deren Dauer zwar ähnlich derjenigen eines typischen Eigenechos ist, jedoch aufgrund der kleinen Amplitude vernachlässigt werden kann. Des weiteren tritt ein neues amplitudenstarkes Echo (E6) auf, während das dritte Echo (E3) allmählich in der Amplitude abnimmt und sich damit langsam als Störecho herausstellt. Demgegenüber zeigt das vierte Echo (E4) eine kontinuierlich steigende Bedeutung, die sich besonders stark in dem zugehörigen vierten Auswerteechogramm (AE4) manifestiert. In diesem Auswerteechogramm (AE4) tritt außerdem erstmals das Auswerteecho (A6) des neu hinzugekommenen starken Echos (E6) auf, während für den einen Wandler das dritte Auswerteecho (A3) stark verkleinert wurde, da das zugehörige Meßecho (E3) nicht mehr den Schwellenwert erreicht hat.

Im Meßechogramm (ME5) des fünften Meßzyklus setzt sich die vorstehend beschriebene Tendenz fort. Das dritte Echo (E3) ist nur noch sehr schwach, das fünfte Echo (E5) bleibt anmplitudenschwach, während das sechste Echo (E6) amplitudenstärker wird. Außerdem geht das vierte Echo (E4) allmählich in Richtung Sättigung der Ultraschallempfänger. Dementsprechend fällt das zugehörige fünfte Auswerteechogramm (AE5) aus. Das dritte Auswerteecho (A3) ist bis auf einen geringfügigen Rest eliminiert, so daß es nunmehr klar als Störecho identifiziert ist. Dagegen gewinnt neben dem vierten Echo (E4) noch das neu hinzugekommene Auswerteecho (A6) an Bedeutung.

Im Echogramm (ME6) des sechsten Meßzyklus erhält das vierte Echo (E4) allmählich einen rechteckförmigen Signalverlauf. Dies zeigt an, daß trotz der aus den vorangegangenen Meßzyklen zu schließenden, diffusen Reflexionseigenschaften des zu diesem Echo (E4) gehörigen Gegenstands der reflektierte Anteil nun so groß ist, daß die Empfangverstärker in Sättigung gehen. Dies ist ein sehr starkes Indiz, daß dieses Echo (E4) der in der Gasse (2) befindlichen Person (12) zuzuordnen ist. Bei der Gewinnung des sechsten Auswerteechogramms (AE6) wurde wiederum zur Berücksichtigung der Fahrzeuggeschwindigkeit (v) die Zeitinkrementverschiebung (dt) wie beim dritten Auswerteechogramm (AE3) vorgenommen. Das am Schluß der veranschaulichten Meßzyklussequenz vorliegende Auswerteechogramm (AE6) zeigt sehr deutlich die Verstärkung von kontinuierlich vorliegenden, relativ amplitudenstarken und zeitlich mit den Ultraschallsendeimpulsen (SE) dauerhaft korrelierten Echos, wie sie typisch für Eigenechos von in der Hauptabstrahlrichtung der Ultraschallimpulse befindlichen Hindernissen, insbesondere auch Personen, sind, während unkorrelierte und/oder kurzzeitige und/oder sehr amplitudenschwache Echos, die typisch für Stör- und Fremdechos sind, unterdrückt werden. Die Fremdechounterdrückung wird dabei durch die oben erwähnte zufallsverteilte Variation der Meßzyklendauer unterstützt. Mit dem geschilderten Bewertungsverfahren lassen sich folglich Eigenechos sehr deutlich und betont aus der Gesamtheit der empfangenen Ultraschallechos heraus ermitteln.

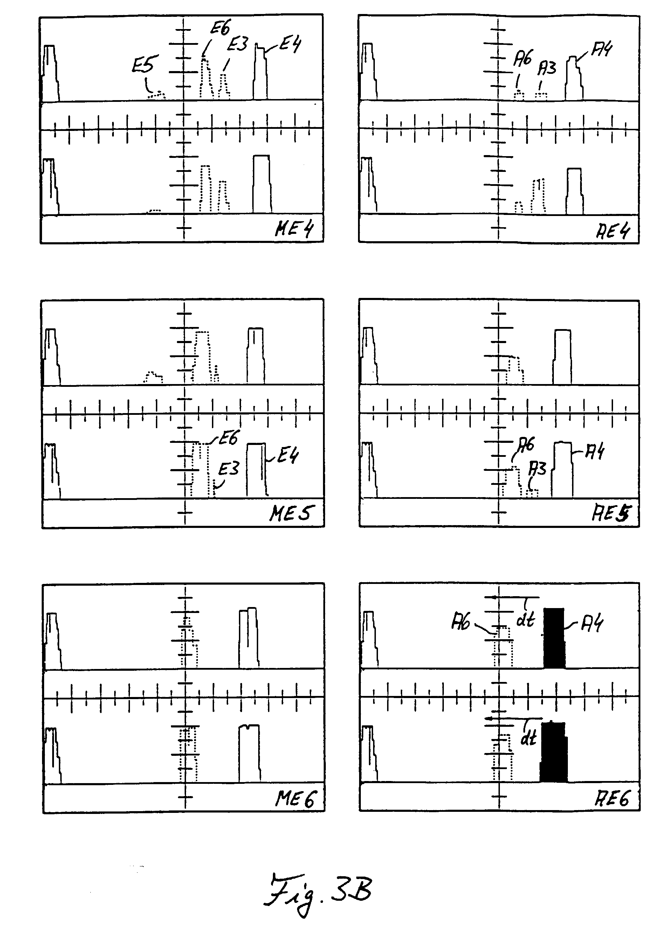

Nachdem in den bisherigen sechs Meßzyklen die jeweiligen Abtastzeitintervalle einzeln betrachtet wurden, wird nun anhand des erhaltenen sechsten Auswerteechogramms (AE6) eine Hindernisauswertung durchgeführt, indem die zugehörige Abfrage (25) im Flußdiagramm von Fig. 2 bejahend beantwortet wird. Der Hinderniserkennungsschritt (27) beinhaltet die folgende, in Fig. 4 als Oszillogrammbild wiedergegebene Analyse des sechsten Auswerteechogramms (AE6). Zunächst werden für die Hinderniserkennung ein oberer Echoflächen-Schwellenwert (ES1) sowie ein unterer Echoflächen-Schwellenwert (ES2) festgelegt. Dann werden für die Auswerteechohüllkurven des sechsten Auswerteechogramms (AE6) zugehörige Echoflächen (EF11, EF12, EF21, EF22) gebildet, indem die einzelnen, zu dem sechsten Auswerteechogramm (AE6) gehörigen Echogramme der einzelnen Wandler jeweils nach einem Wert oberhalb eines vorgegebenen Schwellenwertes durchsucht werden und anschließend jeweils mittels eines Zeitintervallfensters die vorliegende Echofläche unter der Echohüllkurve gebildet wird. Zum Vergleich sind in Fig. 4 neben den stark umrandeten, ermittelten Echoflächen (EF11 bis EF22) die zugehörigen Echos des sechsten Auswerteechogramms (AE6) eingezeichnet, wie sie in Fig. 3B dargestellt sind. Die für die beiden Wandler (5, 6) ermittelten Echoflächen (EF21, EF22; EF11, EF12) werden dann mit den festgelegten Schwellenwerten (ES1, ES2) sowie untereinander wie folgt verglichen, um auf das Vorhandensein oder Nichtvorhandensein eines Hindernisses zu schließen.

Zum einen erfolgt eine Hindernismeldung immer dann, wenn eine der Echoflächen (EF11 bis EF22) größer als der obere Schwellenwert (ES1) ist. Zusätzlich erfolgt eine Hindernismeldung dann, wenn für Echos der beiden Wandler (5, 6), die zum selben Gegenstand gehören, ein Echoflächenwert auftritt, der zwar jeweils kleiner als der obere Schwellenwert (ES1), jedoch größer als der untere Schwellenwert (ES2) ist. Für den konkreten Fall von Fig. 4 bedeutet dies, daß für diejenigen Echoflächen (EF12, EF22), die auf die in der Fahrgasse (2) befindliche Person (12) zurückgehen, eine Hindernismeldung an das FTS erfolgt. Zusammen mit den Daten von den anderen Wandlern (7, 8) läßt sich damit die Position des Hindernisses, hier der Person (12), sowohl längs wie auch quer zur Fahrtrichtung aus der zeitlichen Lage der Echohüllkurven und deren Zeitunterschieden zwischen den Wandlern sehr genau bestimmen. Das Fahrzeug (1) kann dann ggf. zunächst in eine Langsamfahrt übergehen und bei Unterschreiten einer kritischen Distanz anhalten. Nach diesem Erkennungsschritt (27) fährt der Programmablauf von Fig. 2 mit einer Abfrage (28) fort, ob die Ultraschall-Hinderniserkennungsmessung weiter fortgesetzt werden soll. Wenn ja, wird wiederum zum Parameteranpaßschritt (26) übergegangen, in welchem die Parameter wiederum entsprechend eventuell bereits erkannter Hindernisse eingestellt werden. Falls eine Fortsetzung nicht erwünscht ist, endet der Programmablauf (Schritt 29).

Selbst für den schwierigen Anwendungsfall von Fig. 1, bei dem eine enge, von seitlichen Bewehrungen begrenzte Gasse (2) auf Hindernisse zu überwachen ist, führt das obige Verfahren somit aufgrund seiner Amplitudenbewertung der Echohüllkurven aufeinanderfolgender Meßzyklen zu einer sehr zuverlässigen Hinderniserkennung. Es versteht sich, daß neben dem oben detailliert beschriebenen, konkreten Beispiel eine Vielzahl von Verfahrensvarianten im Rahmen der durch die Ansprüche festgelegten Erfindung realisierbar sind. Insbesondere kann das erfindungsgemäße Verfahren nicht nur von einem bewegten Ultraschall-Hinderniserkennungssystem, sondern ebensogut von einem stationär angeordneten System verwendet werden.

Eine besonders vorteilhafte Variante sieht vor, die gemessenen Echohüllkurven in den einzelnen Meßzyklen mit vorab gespeicherten Hüllkurvenformen zu vergleichen, um daraus schließen zu können, ob ein Eigenecho vorliegt und von welcher Art Gegenstand dieses stammt. Dabei können für diesen Vergleich entweder direkt die Hüllkurven der gemessenen Echos oder die Hüllkurven der daraus abgeleiteten Auswerteechos herangezogen werden. In jedem Fall nutzt diese Variante die Eigenschaft aus, daß die Hüllkurven häufig sehr charakteristisch für bestimmte Hindernisse sind, was aufgrund der Form und vor allem der Reflexionseigenschaften von Kleidung insbesondere auch für Personen gilt, so daß eine rasche und sichere Hinderniserkennung beispielsweise bei dem oben beschriebenen fahrerlosen Transportsystem zu einem weiter erhöhten Schutz von Personen in den Lagergassen vor den Fahrzeugen führen kann. Die vorab abzuspeichernden Hüllkurven können dabei durch eine Rechnersimulation oder noch besser anhand vorhergehender Testfahrten gewonnen werden. Derart vorab in das System eingespeicherte Ultraschallechodaten können für den Anwendungsfall des fahrerlosen Transportsystems zudem dazu verwendet werden, daß das Fahrzeug einen bestimmten Fahrkurs erlernt. Treten dann im späteren Betrieb signifikant andere Echoverläufe auf, können diese ggf. sehr rasch vom Fahrzeug als Hindernisse beurteilt werden. Selbst wenn dieser Hüllkurvenvergleich mit abgespeicherten Daten ohne die zusätzliche Echohüllkurvenbewertung mit Erstellung von Auswerteechogrammen realisiert wird, was selbstverständlich möglich ist, bringt dies noch immer eine Verbesserung in der Hinderniserkennung gegenüber der herkömmlichen, reinen Laufzeitmessung.

Zu einem erhöhten Personenschutz für ein solches fahrerloses Transportsystem kann des weiteren auch eine zusätzliche Bremswegkontrolle mittels des Ultraschall-Hinderniserkennungssystems beitragen. Dazu kontrolliert das Ultraschall-Hinderniserkennungssystem redundant den Bremsweg zusätzlich zu der herkömmlich in einem fahrerlosen Transportfahrzeug vorhandenen Bremswegkontrolle und stoppt das Fahrzeug, wenn der Bremsweg einen erkannten Hindernisabstand überschreitet. Für diese Zusatzfunktion besitzt das Ultraschall-Hinderniserkennungssystem Eingänge, welche digitale Signale von Drehimpulsgebern oder analoge Signale von Tachogeneratoren verarbeiten und durch zeitliche Verknüpfung von entsprechend ausgegebenen Stoppbefehlen an das Fahrzeug den Bremsweg errechnen lassen können.

## Patentansprüche

1. Verfahren zur Ultraschall-Hinderniserkennung, bei dem - in aufeinanderfolgenden Meßzyklen jeweils ein Ultraschallimpuls (SE) von wenigstens einer Ultraschallsendereinheit (5 bis 8) abgestrahlt und anschließend Ultraschallwellen zeitlich aufgelöst als gemessenes Echogramm von einer zugehörigen Ultraschallempfängereinheit (5 bis 8) erfaßt sowie die erfaßten Ultraschallwellen zur Erkennung von ultraschallwellenreflektierenden Hindernissen (10, 11, 12) ausgewertet werden,
dadurch gekennzeichnet, daß
- bei der Auswertung aus in den aufeinanderfolgenden Meßzyklen gemessenen Echogrammen (ME1 bis ME6) jeweils Auswerteechogramme (AE1 bis AE6) durch eine Bewertung gewonnen werden, bei welcher zeitaufgelöst die Amplituden des ersten Auswerteechogramms (AE1) aus den Amplituden des ersten Meßechogramms (ME1) bestimmt werden, indem über einem vorgegebenen Amplitudenschwellenwert liegende Amplituden des ersten Meßechogramms stärker als unterhalb dieses Schwellenwertes liegende Amplituden bewertet werden, und die Amplituden eines jeweils nächsten Auswerteechogramms durch Erhöhen der Amplituden des vorhergehenden Auswerteechogramms an Echogrammstellen, an denen die Amplituden des neu gemessenen Echogramms höher als der vorgegebene Schwellenwert sind, sowie durch Erniedrigen an Echogrammstellen, an denen die Amplituden des neu gemessenen Echogramms geringer als der vorgegebene Schwellenwert sind, bestimmt werden.

2. Verfahren nach Anspruch 1, weiter dadurch gekennzeichnet, daß
- der Schwellenwert für die Amplitudenerhöhung und der Schwellenwert für die Amplitudenerniedrigung gleich groß gewählt werden,
- die Amplitudenerniedrigung in einer Multiplikation der Amplitude des vorhergehenden Auswerteechogramms mit einem Faktor kleiner als eins besteht und
- die Amplitudenerhöhung in der Addition der Amplitude des neu gemessenen Echogramms zur Amplitude des vorhergehenden Auswerteechogramms besteht.

3. Verfahren nach Anspruch 2, weiter gekennzeichnet durch einen Hindernisbestimmungsschritt, bei dem die Flächen (EF11 bis EF22) unter den Echohüllkurven eines jeweiligen Auswerteechogramms bestimmt und mit einem oberen Flächenschwellenwert (ES1) und einem unteren Flächenschwellenwert (ES2) verglichen werden, wobei auf ein Hindernis geschlossen wird, wenn ein Flächeninhalt größer als der obere Flächenschwellenwert ist oder wenn der Flächeninhalt zweier kohärenter Echos von benachbarten Ultraschallempfängereinheiten jeweils größer als der untere Flächenschwellenwert ist.

4. Verfahren nach einem der Ansprüche 1 bis 3, weiter dadurch gekennzeichnet, daß
die Hüllkurven von gemessenen Echogrammen und/oder von Auswerteechogrammen mit abgespeicherten Hüllkurven entsprechender, vorab situationsanalog gewonnerer Echogramme verglichen werden, wobei das Vergleichsergebnis zur Feststellung der Anwesenheit von Hindernissen verwendet wird.

5. Verfahren nach einem der Ansprüche 1 bis 4, weiter dadurch gekennzeichnet, daß
die Geschwindigkeit (v) der einen oder mehreren Ultraschallempfängereinheiten erfaßt und der Zeitmaßstab der Auswerteechogramme dazu passend nachgeführt wird.

6. Verfahren nach einem der Ansprüche 1 bis 5, weiter dadurch gekennzeichnet, daß
der Abstrahlpegel der gesendeten Ultraschallimpulse jeweils so eingestellt wird, daß die Reichweite nur wenig größer als die Entfernung eines als nächstliegend erkannten Hindernisses ist.

7. Verfahren nach einem der Ansprüche 1 bis 6, weiter dadurch gekennzeichnet, daß
die Zeitabstände zwischen aufeinanderfolgend gesendeten Ultraschallimpulsen unkorreliert, insbesondere zufallsverteilt, innerhalb eines vorgegebenen Bereichs verändert werden.

8. Verfahren nach einem der Ansprüche 1 bis 7, weiter dadurch gekennzeichnet, daß
die Empfangsverstärkung der Ultraschallempfängereinheiten während einer jeweiligen Echogrammaufnahme zeitlich verändert wird, wobei die Verstärkung voreingestellt in Abhängigkeit von der Zeit nach Aussenden eines jeweiligen Ultraschallimpulses entsprechend einer vorgegebenen Kennlinie, insbesondere monoton ansteigend, variiert und die Verstärkung im jeweils zugehörigen Zeitbereich gegenüber dem Kennlinienwert bei einem erkannten Hindernisecho zusätzlich angehoben und/oder bei einem erkannten Fehlecho zusätzlich verringert wird.

## Claims

1. A process for ultrasound obstacle identification in which
- in consecutive measurement cycles an ultrasound impulse (SE) is emitted from at least one ultrasound transmitter unit (5 to 8) and then ultrasound waves are recorded staggered over time by a corresponding ultrasound receiver unit (5 to 8) as a measured echogram and the recorded ultrasound waves are evaluated to identify ultrasound wave reflecting obstacles (10, 11, 12), characterised in that
- during the evaluation of the echograms (ME1 to ME6) measured in the subsequent measurement cycles, evaluation echograms (AE1 to AE6) are obtained by means of an assessment in which staggered over time the amplitudes of the first evaluation echogram (AE1) are determined from the amplitudes of the first measurement echogram (ME1) by assessing amplitudes in the first measurement echogram lying over a pre-determined amplitude threshold value as being stronger than amplitudes lying under this threshold value, and the amplitudes of a subsequent evaluation echogram are determined by increasing the amplitudes of the preceding evaluation echogram at points on the echogram at which the amplitudes of the newly measured echogram are higher than the pre-determined threshold value and by decreasing the amplitudes of the preceding evaluation echogram at points on the echogram at which the amplitudes of the newly measured echogram are smaller than the pre-determined threshold value.

2. A process in accordance with Claim 1, further characterised in that
- the threshold value selected for the increase in amplitude and the threshold value selected for the decrease in amplitude are the same value,
- the decrease in amplitude consists of a multiplication of the amplitude of the preceding evaluation echogram with a factor of less than one and
- the increase in amplitude consists of the addition of the amplitude of the newly measured echogram to the amplitude of the previous evaluation echogram.

3. A process in accordance with Claim 2, further characterised by an obstacle determining step in which the areas (EF11 to EF22) under the echo envelope curve of respective evaluation echograms are determined and compared with an upper area threshold value (ES1) and a lower area threshold value (ES2), with an obstacle being deemed to be present when an area is greater than the upper area threshold value, or when the areas of two coherent echoes from neighbouring ultrasound receiver units are each greater than the lower area threshold value.

4. A process in accordance with one of Claims 1 to 3, further characterised in that the envelope curves of measured echograms and/or of evaluation echograms are compared with stored envelope curves of corresponding echograms previously obtained in analogous situations, with the result of the comparison being used to establish the presence of obstacles.

5. A process in accordance with one of Claims 1 to 4, further characterised in that the speed (v) of the one or more ultrasound receiver units is measured and the time scale of the evaluation echograms is set in relation thereto.

6. A process in accordance with one of Claims 1 to 5, further characterised in that the emitting level of the ultrasound impulses emitted is set such that the range is only slightly greater than the distance to an obstacle identified as the closest one.

7. A process in accordance with one of Claims 1 to 6, further characterised in that the time intervals between subsequently transmitted ultrasound impulses are altered within a pre-determined range in an uncorrelated manner, in particularly randomly distributed.

8. A process in accordance with one of Claims 1 to 7, further characterised in that the receiver amplification of the ultrasound receiver units during each echogram recording is altered in relation to time, with the amplification being varied in a pre-set manner dependent upon the time after transmission of an ultrasound impulse according to a pre-determined characteristic line, in particular monotonically increasing, and the amplification in the corresponding time range being additionally increased in relation to the characteristic line value when an obstacle echo is identified and/or additionally decreased in relation to the characteristic line when a false echo is identified.

## Revendications

1. Procédé de reconnaissance des obstacles par ultrasons, dans lequel
- dans le cadre de cycles de mesure successifs, une impulsion ultrasonore (SE) est émise par au moins une unité émettrice d'ultrasons (5 à 8), puis des ondes ultrasonores, résolues dans le temps, sont détectées, sous forme d'un échogramme mesuré, par une unité correspondante réceptrice d'ultrasons (5 à 8), les ondes ultrasonores détectées étant évaluées pour reconnaître les obstacles (10, 11, 12) réfléchissant les ondes ultrasonores, caractérisé en ce que
- lors de l'évaluation, on obtient, à partir de chacun des échogrammes (ME1 à ME6) mesurés au cours des cycles de mesure successifs, un échogramme d'évaluation (AE1 à AE6), grâce à une pondération dans laquelle, avec résolution dans le temps, les amplitudes du premier échogramme d'évaluation (AE1) sont déterminées à partir des amplitudes du premier échogramme de mesure (ME1), par le fait que les amplitudes du premier échogramme de mesure supérieures à une amplitude seuil prédéfinie reçoivent un poids plus fort que les amplitudes inférieures à ce seuil, et les amplitudes d'un échogramme d'évaluation donné sont déterminées par une augmentation des amplitudes de l'échogramme d'évaluation précédent, sur les points de l'échogramme où les amplitudes de l'échogramme qui vient d'être mesuré sont supérieures au seuil prédéterminé, et par diminution sur les points de l'échogramme où les amplitudes de l'échogramme qui vient d'être mesuré sont plus petites que le seuil prédéfini.

2. Procédé selon la revendication 1, caractérisé en outre en ce que
- le seuil correspondant à l'augmentation de l'amplitude et le seuil correspondant à la diminution de l'amplitude sont choisis à des valeurs égales,
- la diminution de l'amplitude consiste à multiplier par un facteur inférieur à 1 l'amplitude de l'échogramme d'évaluation précédent, et
- l'augmentation de l'amplitude consiste à ajouter à l'amplitude de l'échogramme d'évaluation précédent l'amplitude de l'échogramme qui vient d'être mesuré.

3. Procédé selon la revendication 2, caractérisé en outre par une étape de détermination de l'obstacle, dans laquelle on détermine l'aire (EF11 à EF22) en-dessous des courbes enveloppes d'écho d'un échogramme d'évaluation donné, et on la compare à une aire limite supérieure (ES1) et à une aire limite inférieure (ES2), auquel cas on considère qu'il existe un obstacle quand une aire est supérieure à l'aire limite supérieure ou encore quand l'aire de chaque écho de deux échos cohérents provenant d'unités réceptrices d'ultrasons voisines est supérieure à l'aire limite inférieure.

4. Procédé selon l'une des revendications 1 à 3, caractérisé en outre en ce que les courbes enveloppes d'échogrammes mesurés et/ou d'échogrammes d'évaluation sont comparées à des courbes enveloppe mémorisées d'échogrammes correspondants, obtenus au préalable dans des situations analogues, le résultat de la comparaison étant utilisé pour constater la présence d'obstacles.

5. Procédé selon l'une des revendications 1 à 4, caractérisé en ce qu'on y détecte la vitesse (v) de l'unité ou des plusieurs unités réceptrices d'ultrasons, et on définit l'échelle des temps des échogrammes d'évaluation en fonction de cette vitesse.

6. Procédé selon l'une des revendications 1 à 5, caractérisé en outre en ce que le niveau d'émission des impulsions ultrasonores émises est dans tous les cas ajusté de façon que la portée ne soit que peu supérieure à l'éloignement d'un obstacle reconnu comme étant le plus proche.

7. Procédé selon l'une des revendications 1 à 6, caractérisé en outre en ce que les écarts dans le temps entre des impulsions ultrasonores émises successivement sont soumis à des variations non-corrélées, en particulier selon une distribution aléatoire, à l'intérieur d'un intervalle prédéfini.

8. Procédé selon l'une des revendications 1 à 7, caractérisé en outre en ce que l'amplification en réception des unités réceptrices d'ultrasons est soumise à une variation dans le temps pendant l'enregistrement d'un échogramme donné, l'amplification variant selon un réglage prédéfini en fonction du temps après émission d'une impulsion ultrasonore donnée, en fonction d'une caractéristique prédéfinie, et en particulier présentant une croissance monotone, et l'amplification, dans l'intervalle de temps correspondant, est en outre augmentée par rapport à la valeur caractéristique si la reconnaissance porte sur un écho d'obstacle, et/ou est en outre diminuée si la reconnaissance porte sur l'absence d'écho.
